(19)

Europäisches
Patentamt
European
Patent Office
Office européen
des brevets

(11) **EP 4 686 080 A1**

(12) **EUROPEAN PATENT APPLICATION**
published in accordance with Art. 153(4) EPC

(43) Date of publication:
**28.01.2026 Bulletin 2026/05**

(21) Application number: **24796802.7**

(22) Date of filing: **10.04.2024**

(51) International Patent Classification (IPC):
***H02P 21/24*** (2016.01)    ***H02P 27/08*** (2006.01)

(52) Cooperative Patent Classification (CPC):
**H02P 21/24; H02P 27/08**

(86) International application number:
**PCT/JP2024/014592**

(87) International publication number:
**WO 2024/225046 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 JP 2023074552**

(71) Applicant: **MITSUBISHI HEAVY INDUSTRIES
THERMAL SYSTEMS, LTD.
Tokyo 100-8332 (JP)**

(72) Inventors:
• **SUNOHARA, Tetsu
Tokyo 100-8332 (JP)**

• **AIBA, Kenichi
Tokyo 100-8332 (JP)**
• **SHIMIZU, Kenji
Tokyo 100-8332 (JP)**
• **SERIZAWA, Kazuhiko
Tokyo 100-8332 (JP)**
• **SUMITO, Kiyotaka
Tokyo 100-8332 (JP)**
• **KOMIYA, Shinichi
Tokyo 100-8332 (JP)**
• **IWAKI, Michizo
Tokyo 100-8332 (JP)**

(74) Representative: **Cabinet Beau de Loménie
103, rue de Grenelle / CS 90800
75340 Paris Cedex 07 (FR)**

(54) **MOTOR CONTROL DEVICE AND COMPRESSOR COMPRISING SAME**

(57)    Provided are: a motor control device with which consistency between a d-axis current command and a q-axis current command can be achieved in response to target motor control; and a compressor comprising the motor control device. A motor control device 1 comprises: an inverter (3) that converts DC voltage into three-phase AC voltage and outputs the three-phase AC voltage to a motor; and an inverter control means (10) that controls the inverter. The motor control device performs weakening magnetic field control by flowing negative current to a d-axis current (id). The motor control device also comprises a current command generation means (24) that, when the weakening magnetic field control is being executed, generates a first d-axis current command (id$_1$*) on the basis of an inter-line voltage command including a d-axis voltage command (vd*) and a q-axis voltage command (vq*) of the motor, and generates a first q-axis current command (iq$_1$*) on the basis of the first d-axis current command.

FIG. 1

## Description

Technical Field

The present disclosure relates to a motor control device and a compressor including the same.

Background Art

A servo system using a motor is used as a power source for various mechanical devices. In a general servo system, speed control and current control are performed in motor control. In general, in power conversion for outputting an alternating current voltage to a motor, a limit on a maximum voltage that can be output or a limit on a maximum current that can be output is provided.

PTL 1 discloses a control in which a d-axis current command and a q-axis current command are individually generated in a motor current control. In the d-axis current command, depending on whether the motor is to be operated at a low speed or a high speed, a different d-axis current command is selected. In this way, by making it possible to select a plurality of d-axis currents according to the drive state of the motor, an operable range of the motor can be expanded over a wide range from a low speed to a high speed.

Citation List

Patent Literature

[PTL 1] Japanese Unexamined Patent Application Publication No. 2017-205017

Summary of Invention

Technical Problem

However, since the d-axis current command and the q-axis current command disclosed in PTL 1 are individually generated, for example, in a case where weakening magnetic field control is executed, there is a possibility that the d-axis current command and the q-axis current command may be commands that are not consistent with each other in the target motor control. In this case, the behavior of the motor cannot be controlled as a target, or it takes time to perform control as a target.

The present disclosure has been made in view of such circumstances, and an object of the present disclosure is to provide a motor control device capable of achieving consistency between a d-axis current command and a q-axis current command in accordance with target motor control, and a compressor including the same.

Solution to Problem

According to a motor control device according to some embodiments of the present disclosure, there is provided a motor control device that performs weakening magnetic field control by causing a negative current to flow to a d-axis current, the motor control device including: an inverter that converts a direct current voltage into a three-phase alternating voltage and outputs the three-phase alternating voltage to a motor; inverter control means for controlling the inverter; and current command generation means for generating a first d-axis current command based on an inter-line voltage command including a d-axis voltage command and a q-axis voltage command of the motor, and generating a q-axis current command based on the first d-axis current command, in a case where the weakening magnetic field control is executed.

A compressor according to some embodiments of the present disclosure includes: the motor control device; and a motor that is drive-controlled by the motor control device.

Advantageous Effects of Invention

According to the present disclosure, there is an effect that it is possible to easily achieve the consistency between the d-axis current command and the q-axis current command for controlling rotation speed of the motor.

Brief Description of Drawings

FIG. 1 is a diagram schematically showing a configuration of a motor control device according to one embodiment of the present disclosure.

FIG. 2 is a diagram showing a motor current curve when the motor control device individually generates a d-axis current command and a q-axis current command in a case where weakening magnetic field control is executed.

FIG. 3 is a diagram showing a motor current curve when the motor control device generates a first q-axis current command based on a first d-axis current command in a case where the weakening magnetic field control is executed.

FIGS. 4A to 4D are waveform diagrams showing a transition of each parameter of a motor in a case where the motor control device individually generates the d-axis current command and the q-axis current command.

FIGS. 5A to 5D are waveform diagrams showing a transition of each parameter of a motor in a case where the motor control device generates the first q-axis current command based on the first d-axis current command.

Description of Embodiments

Hereinafter, one embodiment of a motor control device according to the present disclosure and a compressor including the same will be described with reference to the drawings.

In the following, for convenience of description, the positional relationship between each of the configuration elements described using the expressions "up" and "down" on the paper surface indicates a perpendicularly upper side and a perpendicularly lower side, respectively. In the present embodiment, regarding up-down direction and horizontal direction which can obtain the same effect, for example, the up-down direction on the paper surface is not necessarily limited to the perpendicularly up-down direction, and the direction may correspond to the horizontal direction orthogonal to the perpendicular direction.

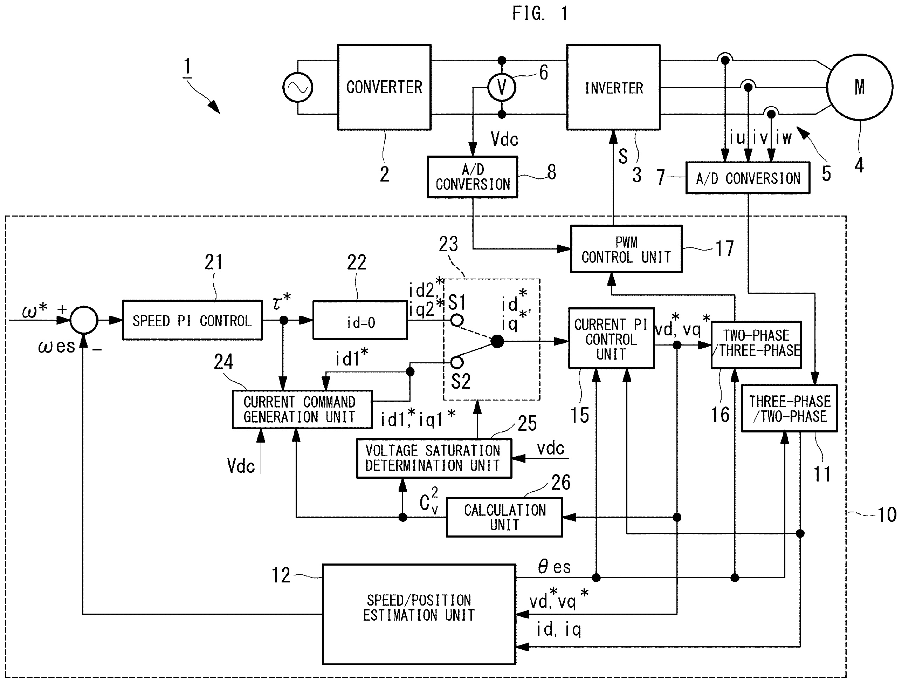

FIG. 1 is a diagram schematically showing a configuration of a motor control device 1 according to one embodiment of the present disclosure. As shown in FIG. 1, the motor control device 1 includes a converter 2 that converts alternating current power from an alternating power supply into direct current power, an inverter 3 that converts the direct current power output from the converter 2 into three-phase alternating power and outputs the three-phase alternating power to a motor 4, and an inverter control device 10 that controls the inverter 3.

The inverter 3 includes a switching element of an upper arm and a switching element of a lower arm provided corresponding to each phase, and the switching elements are controlled to be turned on and off by a gate drive signal S supplied from the inverter control device 10, so that motor voltages of a U phase, a V phase, and a W phase supplied to the motor 4 are controlled.

The motor 4 is, for example, a permanent magnet type synchronous motor used as a driving source of a compressor.

The motor control device 1 includes a current sensor 5 that measures a motor current (currents of U phase, V phase, and W phase) flowing through the motor 4, and a voltage sensor 6 that measures an input direct current voltage Vdc of the inverter 3. For the motor current, two phases may be detected, and the remaining one phase may be obtained by calculation from the two detected phases. Instead of such a measurement method, three-phase motor currents iu, iv, and iw may be measured by providing a shunt resistor in a direct current bus L. In this way, the method for acquiring the three-phase motor currents iu, iv, and iw is not particularly limited.

The three-phase motor current detected by the current sensor 5 is converted into a digital signal by an A/D conversion unit 7, and the input direct current voltage Vdc detected by the voltage sensor 6 is converted into a digital signal by an A/D conversion unit 8, and the digital signals are output to the inverter control device 10.

The inverter control device 10 is, for example, a micro processing unit (MPU), and has a computer-readable recording medium in which a program for realizing the processing of each unit described below is recorded. A CPU reads the program recorded on the recording medium into a main storage device such as a RAM and executes the program, thereby realizing processing in each of the following units. Examples of the computer-readable recording medium include a magnetic disk, a magneto-optical disk, and a semiconductor memory.

The inverter control device 10 generates a gate drive signal S for each phase so as to match the rotation speed of the motor 4 with a motor rotation speed command given from a higher-level control device (not shown), and supplies the gate drive signal S to a switching element corresponding to each phase of the inverter 3 to control the inverter 3 and supply a desired three-phase alternating voltage to the motor 4.

Specifically, the inverter 3 includes a three-phase/two-phase conversion unit 11, a speed/position estimation unit 12, a current PI control unit 15, a two-phase/three-phase conversion unit 16, a PWM control unit 17, a first processing unit 21, a second processing unit 22, a selection unit (selection means) 23, a current command generation unit (current command generation means) 24, a voltage saturation determination unit (determination means) 25, and a calculation unit 26.

The three-phase/two-phase conversion unit 11 converts the three-phase motor currents iu, iv, and iw output from the A/D conversion unit 7 into two-phase currents, that is, a q-axis current iq and a d-axis current id, and outputs the two-phase currents to the speed/position estimation unit 12.

The speed/position estimation unit 12 calculates an estimated position θes of the motor 4 and an estimated rotation speed ωes of the motor 4 by using the q-axis current iq and the d-axis current id from the three-phase/two-phase conversion unit 11 and a two-phase voltage command calculated by the current PI control unit 15 in the previous clock cycle, that is, a q-axis voltage command vq* and a d-axis voltage command vd*.

The estimated rotation speed ωes of the motor 4 is output to the first processing unit 21.

The first processing unit 21 generates a torque command τ* based on a deviation Δω between a rotation speed command ω* and the estimated rotation speed ωes. Here, the first processing unit 21 has a limiter function, and adjusts the torque command τ* not to exceed a preset upper limit value.

Further, the first processing unit 21 outputs the generated torque command τ* to each of the second processing unit 22 and the current command generation unit 24.

The calculation unit 26 calculates a second variable (Cv²), which is a sum of squares of the d-axis voltage command vd* based on the previous value of a first d-axis current command $id_1$* and the q-axis voltage command vq* based on the previous value of the q-axis current command $iq_1$* generated by the current command generation unit 24 to be described later, and outputs the calculated second variable (Cv²) to the current command generation unit 24.

The current command generation unit 24 generates the first d-axis current command $id_1$* based on an inter-line voltage command including the d-axis voltage command vd* and the q-axis voltage command vq* of the motor 4, and generates a first q-axis current command $iq_1$* based on the first d-axis current command $id_1$*. Here, the current command generation unit 24 has a limiter function, and adjusts each of the first d-axis current command $id_1$* and the first q-axis current command $iq_1$* so as not to exceed the upper limit value set in advance.

Specifically, the current command generation unit 24 generates the first d-axis current command $id_1$* that is a d-axis current command corresponding to an excitation current component.

More specifically, first, the current command generation unit 24 calculates a first variable (Cdc²) that is a value of the square of the input direct current voltage Vdc input from the voltage sensor 6. Subsequently, the current command generation unit 24 generates the first d-axis current command $id_1$* based on a third variable that is a difference between the first variable (Cdc²) and the second variable (Cv²). The first d-axis current command $id_1$* generated by the current command generation unit 24 is fed back to the current command generation unit 24 as a previous value, and is used for generating a new first d-axis current command $id_1$*.

For example, the current command generation unit 24 generates $id_1$*(k) that is the first d-axis current command by the following Mathematical Expression (1).

[Expression 1]

$$i_{d1}^*(k) = Lmt(i_{d1}^*(k-1) + \gamma(c_{dc}^2(k-1) - c_v^2(k-1))) \qquad (1)$$

In Mathematical Expression (1), k indicates a current value, and k-1 indicates the previous value. The description of Lmt in Mathematical Expression (1) means that the generation of the first d-axis current command $id_1$* is repeatedly performed by the present Mathematical Expression. Cdc² is a first variable derived from the square of the input direct current voltage Vdc. Cv² is a second variable derived from the sum of squares of the d-axis voltage command vd* and the q-axis voltage command vq*. γ is a coefficient calculated by the following Mathematical Expression (2).

[Expression 2]

$$\gamma = \frac{\alpha \Phi}{c_{dc}^2(k-1)L_d} \qquad (2)$$

In Mathematical Expression (2), φ is a variable derived from an interlinked magnetic flux of the motor 4. α is a coefficient for adjusting the interlinked magnetic flux φ, and is, for example, a value that varies according to each of the windings of the U phase, the V phase, and the W phase. α is adjusted between 0 and 1 according to a response performance required for the first d-axis current command $id_1$*, and acts as a coefficient for accelerating convergence to a predetermined value by being applied to the above-described Mathematical Expression (1). The larger α is, the faster convergence to a predetermined value can be achieved. Ld is a variable derived from the d-axis inductance of the motor 4.

The current command generation unit 24 generates the first q-axis current command $iq_1$* corresponding to a torque component of a load.

Specifically, the current command generation unit 24 calculates a fourth variable based on the first d-axis current command $id_1$*, the d-axis inductance of the motor 4, the q-axis inductance of the motor 4, and the interlinked magnetic flux of the motor 4, and generates the first q-axis current command $iq_1$* based on the fourth variable and a fifth variable based on the torque command τ* of the motor 4.

Here, the current command generation unit 24 generates $iq_1$*(k) that is the first q-axis current command by the following Mathematical Expression (3).
[Expression 3]

$$i_{q1}^*(k) = \frac{c_t^*}{\Phi + 2 \times L_m \times i_{d1}^*(k)} \qquad (3)$$

In Mathematical Expression (3), Ct* is a value derived from the torque command $\tau^*$. $\varphi$ is the interlinked magnetic flux of the motor 4. Lm is a variable derived from the d-axis inductance and the q-axis inductance of the motor 4. id$_1$*(k) is the first d-axis current command generated by Mathematical Expression (1).

In this way, the current command generation unit 24 generates the first d-axis current command id$_1$* based on the first variable (Cdc$^2$) which is the value of the square of the direct current voltage and the second variable (Cv$^2$) which is the sum of squares of the d-axis voltage command vd* and the q-axis voltage command vq*. The first q-axis current command iq$_1$* is generated based on the newly generated first d-axis current command id$_1$*. That is, the current command generation unit 24 generates the first d-axis current command id$_1$* and generates the first q-axis current command iq$_1$* based on the first d-axis current command id$_1$*. For this reason, it is possible to easily achieve the consistency between the d-axis current command id* and the q-axis current command iq*.

Next, the second processing unit 22 outputs a preset second d-axis current command id$_2$*. Here, the second d-axis current command id$_2$* is set to zero. In a case where the second d-axis current command id$_2$* is zero, the second processing unit 22 generates the second q-axis current command iq$_2$* based on the above-described Mathematical Expression (3).

The voltage saturation determination unit 25 determines that the weakening magnetic field control is executed in a case where the inter-line voltage command (the above-described second variable) of the motor 4 exceeds the maximum output voltage of the inverter 3 determined based on the input direct current voltage Vdc of the inverter 3.

In a case where the voltage saturation determination unit 25 determines that the weakening magnetic field control is executed, the selection unit 23 selects the first d-axis current command id$_1$* as the d-axis current command id* and selects the first q-axis current command iq$_1$* calculated based on the first d-axis current command id$_1$* as the q-axis current command iq* (selects a contact point S2 in FIG. 1). In a case where it is determined that the weakening magnetic field current is not being executed, the second d-axis current command id$_2$*, that is, zero is selected as the d-axis current command id*, and the second q-axis current command iq$_2$* corresponding to a case where the d-axis current command is zero is selected as the q-axis current command iq* (the contact point S1 in FIG. 1 is selected).

In the present embodiment, when the inter-line voltage command of the motor 4 exceeds the maximum output voltage of the inverter 3, it is determined that the weakening magnetic field control is executed by the voltage saturation determination unit 25. However, the present embodiment is not limited to this example, and for example, when the inter-line voltage command of the motor 4 exceeds a predetermined ratio of the maximum output voltage of the inverter 3, it may be determined that the weakening magnetic field control is executed by the voltage saturation determination unit 25. In addition, a known technique may be appropriately adopted as a method for determining whether or not the weakening magnetic field control is executed.

The inter-line voltage command of the motor 4 is not limited to the estimated inter-line voltage command estimated by using the two-phase voltage command in the previous clock cycle generated by the current PI control unit 15, and may be a command using an actually measured value actually measured by a sensor.

For example, the selection unit 23 may select the first d-axis current command id$_1$* as the d-axis current command id* when a condition of the following Mathematical Expression (4) is satisfied, and may select the second d-axis current command id$_2$* as the d-axis current command id* when the condition is not satisfied.

$$\text{Vmax}^2 = (\text{Vdc}^2/2) < \text{Cv}^2 = \text{vq}^{*2} + \text{vd}^{*2} \qquad (4)$$

In the Mathematical Expression (4), Vmax$^2$ is the square of a value corresponding to the maximum output voltage of the inverter 3, and Cv$^2$ is a value corresponding to the square of the inter-line voltage of the motor 4.

Here, the inter-line voltage command of the motor 4 and the maximum output voltage of the inverter 3 determined based on the direct current voltage input to the inverter 3 are compared with each other in the value of the square in order to prevent an increase in the calculation load of the microcontroller without requiring the calculation of the square root.

In this way, each of the d-axis current command id* and the q-axis current command iq* selected by the selection unit 23 are output to the current PI control unit 15.

The d-axis current command id* and the q-axis current command iq* selected by the selection unit 23, the q-axis current iq and the d-axis current id from the three-phase/two-phase conversion unit 11, and the estimated position $\theta$es of the motor 4 from the speed/position estimation unit 12 are input to the current PI control unit 15.

**EP 4 686 080 A1**

The current PI control unit 15 calculates the deviation between the q-axis current command iq* and the q-axis current iq and the deviation between the d-axis current command id* and the d-axis current id, and generates the q-axis voltage command vq* and the d-axis voltage command vd* such that these deviations approach 0. Specifically, proportional integral control (PI control) is performed for each deviation, and further, in this case, the estimated position θes of the motor 4 is referred to, so that the q-axis voltage command vq* and the d-axis voltage command vd* are calculated and output to the two-phase/three-phase conversion unit 16. Here, the d-axis voltage command vd* is not limited, and the q-axis voltage command vq* is limited to Vdc/√2.

The two-phase/three-phase conversion unit 16 converts the q-axis voltage command vq* and the d-axis voltage command vd* into the three-phase voltage commands vu*, vv*, and vw* by referring to the estimated position θes estimated by the speed/position estimation unit 12, and outputs the three-phase voltage commands vu*, vv*, and vw* to the PWM control unit 17.

The three-phase voltage commands vu*, vv*, and vw* and the input direct current voltage Vdc from the A/D conversion unit 8 are input to the PWM control unit 17. The PWM control unit 17 generates a triangular wave (carrier wave) having a predetermined carrier frequency, compares the triangular wave with the three-phase voltage commands vu*, vv*, and vw*, respectively, and generates the gate drive signal S corresponding to each phase by correcting the duty width of the PWM pulse using the input direct current voltage Vdc, and outputs the gate drive signal S to the inverter 3.

In this way, in the motor control device 1 of the present disclosure, the method of generating the first d-axis current command $id_1^*$ and the first q-axis current command $iq_1^*$ is different from that of the motor control device in the related art in a case where the weakening magnetic field control is executed. Specifically, in a case where the weakening magnetic field control is executed, a new first d-axis current command $id_1^*$ is generated based on the inter-line voltage command including the d-axis voltage command vd* and the q-axis voltage command vq* of the motor 4, and the first q-axis current command $iq_1^*$ is generated based on the generated first d-axis current command $id_1^*$. In this manner, it is possible to perform motor control in which the consistency between the d-axis current command id* and the q-axis current command iq* is easily achieved.

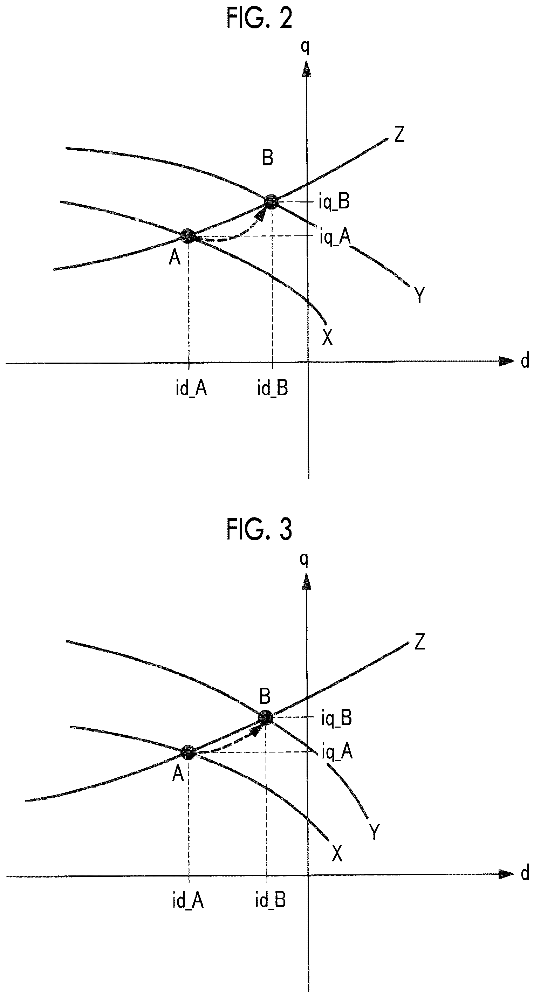

Next, a transition of a motor current in motor control by the motor control device 1 according to the present disclosure will be described. FIG. 2 is a diagram showing a motor current curve in a case where the motor control device 1 individually generates the d-axis current command id* and the first q-axis current command $iq_1^*$ in a case where the weakening magnetic field control is executed. FIG. 3 is a diagram showing a motor current curve in a case where the motor control device 1 generates the first q-axis current command $iq_1^*$ based on the first d-axis current command $id_1^*$ in a case where the weakening magnetic field control is executed. In both drawings, a horizontal axis indicates the d-axis current, and a vertical axis indicates the q-axis current. A curve X indicates a constant interlinked magnetic flux curve in a case where the rotation speed of the motor 4 is ω_A, a curve Y indicates a constant interlinked magnetic flux curve in a case where the rotation speed of the motor 4 is ω_A, and a curve Z indicates a low torque curve. Then, dashed lines in the drawings indicate a transition in which the value of the motor current changes from point A to point B.

When FIG. 2 and FIG. 3 are compared, the dashed line in FIG. 3 is along the curve Z more than the dashed line in FIG. 2, and the path when the motor current changes from point A to point B is short. That is, it can be understood that the condition shown in FIG. 3 can reach the target more quickly. Therefore, as disclosed in the present embodiment, the control is more stable in which the oscillation is suppressed in a case where the first q-axis current command $iq_1^*$ is generated based on the first d-axis current command $id_1^*$ than in a case where the d-axis current command id* and the q-axis current command iq* are individually generated.

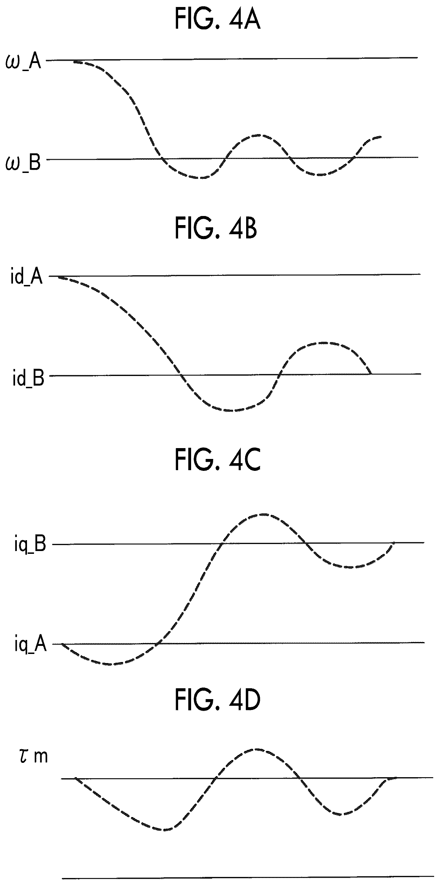

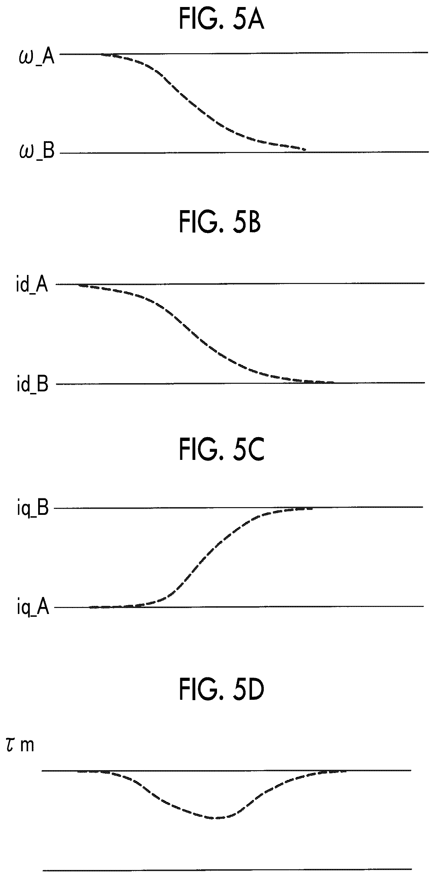

FIGS. 4A to 5D are waveform diagrams for comparing the transition of each parameter of the motor 4 in a case where the weakening magnetic field control is executed. FIGS. 4A to 4D are waveform diagrams showing the transition of each parameter of the motor 4 in a case where the motor control device 1 individually generates the d-axis current command id* and the q-axis current command iq*. FIGS. 5A to 5D are waveform diagrams showing a transition of each parameter of the motor 4 in a case where the motor control device 1 generates the first q-axis current command $iq_1^*$ based on the first d-axis current command $id_1^*$. FIGS. 4A and 5A are waveform diagrams showing the transition of the rotation speed of the motor 4. FIGS. 4B and 5B are waveform diagrams showing the transition of the d-axis current id. FIGS. 4C and 5C are waveform diagrams showing the transition of the q-axis current iq. FIGS. 4D and 5D are waveform diagrams showing the transition of the motor torque.

As shown in FIG. 4A, when the motor control device 1 individually generates the d-axis current command id* and the q-axis current command iq*, an overshoot occurs in the rotation speed of the motor 4 when the rotation speed of the motor 4 reaches the target rotation speed ω_B from the rotation speed ω_A, and the rotation speed converges to the rotation speed ω_B after being dampen-oscillated for a certain period of time. This indicates that in the motor control corresponding to FIG. 4A, the d-axis current command id* and the first q-axis current command $iq_1^*$ are not generated in consideration of each other's command values, and thus, the dampen-oscillation of the rotation speed is generated during a period in which the correction of the d-axis current command id* and the q-axis current command iq* is repeatedly performed.

Meanwhile, as shown in FIG. 5A, in a case where the motor control device 1 generates the first q-axis current

command $iq_1^*$ based on the first d-axis current command $id_1^*$, an overshoot does not occur in the rotation speed of the motor 4 when the rotation speed of the motor 4 reaches the target rotation speed ω_B from the rotation speed ω_A, and the rotation speed of the motor 4 quickly transitions to the rotation speed ω_B. This is because, in the motor control corresponding to FIG. 5A, the first q-axis current command $iq_1^*$ is generated based on the first d-axis current command $id_1^*$, and thus the consistency between the d-axis current command $id^*$ and the q-axis current command $iq^*$ is achieved.

Therefore, when both drawings are compared, in a case where the weakening magnetic field control is executed, the rotation speed of the motor 4 can be stabilized to the target value more quickly when the motor control device 1 generates the first q-axis current command $iq_1^*$ based on the first d-axis current command $id_1^*$.

As shown in FIG. 4B, in a case where the motor control device 1 individually generates the d-axis current command $id^*$ and the q-axis current command $iq^*$, an overshoot occurs in the d-axis current when the d-axis current reaches the target current value id_B from the current value id_A, and converges to the current value id_B after being dampen-oscillated for a certain period of time. This indicates that in the motor control corresponding to FIG. 4B, the d-axis current command $id^*$ and the q-axis current command $iq^*$ are not generated in consideration of each other's command values, and thus, the dampen-oscillation of the d-axis current is generated during a period in which the d-axis current command $id^*$ and the q-axis current command $iq^*$ are repeatedly corrected.

Meanwhile, as shown in FIG. 5B, in a case where the motor control device 1 generates the first q-axis current command $iq_1^*$ based on the first d-axis current command $id_1^*$, an overshoot does not occur in the d-axis current id when the d-axis current id reaches the target current value id_B from the current value id_A, and quickly transitions to the current value id_B. This is because, in the motor control corresponding to FIG. 5B, the first q-axis current command $iq_1^*$ is generated based on the first d-axis current command $id_1^*$, and thus the consistency between the d-axis current command $id^*$ and the q-axis current command $iq^*$ is achieved.

Therefore, when both drawings are compared, in a case where the weakening magnetic field control is executed, the current value of the d-axis current id can be stabilized to the target value more quickly when the motor control device 1 generates the first q-axis current command $iq_1^*$ based on the first d-axis current command $id_1^*$.

As shown in FIG. 4C, in a case where the motor control device 1 individually generates the d-axis current command $id^*$ and the q-axis current command $iq^*$, an overshoot occurs in the q-axis current iq when the q-axis current iq reaches the target current value iq_B from the current value iq_A, and converges to the current value iq_B after being dampen-oscillated for a certain period of time. This indicates that in the motor control corresponding to FIG. 4C, the d-axis current command $id^*$ and the q-axis current command $iq^*$ are not generated in consideration of each other's command values, and thus, the dampen-oscillation of the q-axis current iq is generated during a period in which the d-axis current command $id^*$ and the q-axis current command $iq^*$ are repeatedly corrected.

Meanwhile, as shown in FIG. 5C, in a case where the motor control device 1 generates the first q-axis current command $iq_1^*$ based on the first d-axis current command $id_1^*$, an overshoot does not occur in the q-axis current iq when the q-axis current iq reaches the target current value iq_B from the current value iq_A, and quickly transitions to the current value iq_B. This is because, in the motor control corresponding to FIG. 5C, the first q-axis current command $iq_1^*$ is generated based on the first d-axis current command $id_1^*$, and thus, the consistency between the d-axis current command $id^*$ and the q-axis current command $iq^*$ is achieved.

Therefore, when both drawings are compared, in a case where the weakening magnetic field control is executed, the current value of the first q-axis current command $iq_1^*$ can be stabilized to the target value more quickly when the motor control device 1 generates the first q-axis current command $iq_1^*$ based on the first d-axis current command $id_1^*$.

As shown in FIG. 4D, in a case where the motor control device 1 individually generates the d-axis current command $id^*$ and the q-axis current command $iq^*$, the motor torque is dampen-oscillated for a certain period of time from the torque τm due to the change in the d-axis current command $id^*$ and the q-axis current command $iq^*$, and converges again to the torque τm. This indicates that in the motor control corresponding to FIG. 4D, the d-axis current command $id^*$ and the q-axis current command $iq^*$ are not generated in consideration of each other's command values, and thus, the dampen-oscillation of the motor torque occurs during a period in which the correction of the d-axis current command $id^*$ and the q-axis current command $iq^*$ is repeatedly performed.

Meanwhile, as shown in FIG. 5D, in a case where the motor control device 1 generates the first q-axis current command $iq_1^*$ based on the first d-axis current command $id_1^*$, the motor torque quickly converges to the torque τm again from the torque τm without the occurrence of dampen-oscillation. This is because, in the motor control corresponding to FIG. 5D, the first q-axis current command $iq_1^*$ is generated based on the first d-axis current command $id_1^*$, and thus, the consistency between the d-axis current command $id^*$ and the q-axis current command $iq^*$ is achieved.

Therefore, when both drawings are compared, in a case where the weakening magnetic field control is executed, the motor torque can be stabilized to the target value more quickly when the motor control device 1 generates the first q-axis current command $iq_1^*$ based on the first d-axis current command $id_1^*$.

As described above, according to the motor control device of the present disclosure, in a case where the weakening magnetic field control is executed, the first q-axis current command $iq_1^*$ is generated by the current command generation unit 24 based on the first d-axis current command $id_1^*$. In this way, the first q-axis current command $iq_1^*$

changes in accordance with the change amount of the first d-axis current command $id_1^*$, and thus it is possible to easily achieve the consistency between the d-axis current command $id^*$ and the q-axis current command. Further, by generating the first q-axis current command $iq_1^*$ in this way, the behavior of the motor 4 can be quickly stabilized in response to the target motor control.

According to the present embodiment, the following effects are achieved.

According to the motor control device 1 of the present disclosure, in a case where the weakening magnetic field control is executed, the current command generation unit 24 generates the first q-axis current command $iq_1^*$ for controlling the motor 4, based on the first d-axis current command $id_1^*$. In this manner, it is possible to easily achieve the consistency between the first d-axis current command $id_1^*$ and the first q-axis current command $iq_1^*$ for controlling the rotation speed of the motor. Further, the oscillation of the motor 4 is reduced by improving the consistency between the d-axis current command $id^*$ and the q-axis current command $iq^*$, and the behavior of the motor 4 can be stabilized.

According to the motor control device 1 of the present disclosure, the d-axis current command $id^*$ can be switched between the first d-axis current command $id_1^*$ and the second d-axis current command $id_2^*$ according to whether or not the weakening magnetic field control is executed. Specifically, when the weakening magnetic field control is executed, the first d-axis current command $id_1^*$ is selected as the d-axis current command $id^*$, and when the weakening magnetic field control is not executed, the second d-axis current command $id_2^*$ is selected as the d-axis current command $id^*$. In this manner, it is possible to reduce the amount of calculation processing of the d-axis current command $id^*$.

According to the motor control device 1 of the present disclosure, in a case where the weakening magnetic field control is executed, the current command generation unit 24 generates the first d-axis current command $id_1^*$ based on the third variable which is the difference between the first variable that is the value of the square of the direct current voltage and the second variable that is the sum of the squares based on the previous values of the d-axis voltage command $vd^*$ based on the first d-axis current command $id_1^*$ and the q-axis voltage command $vq^*$ based on the first q-axis current command $iq_1^*$. Then, the first q-axis current command $iq_1^*$ is generated based on the newly generated first d-axis current command $id_1^*$. In this manner, the d-axis current command $id^*$ and the q-axis current command $iq^*$ can be commands in consideration of changes in the direct current voltage command, the d-axis voltage command $vd^*$, and the q-axis voltage command $vq^*$. Therefore, it is possible to easily achieve the consistency between the d-axis current command $id^*$ and the q-axis current command $iq^*$.

The current command generation unit 24 generates the first d-axis current command $id_1^*$ and the first q-axis current command $iq_1^*$ by using the second variable based on the previous values of the d-axis voltage command $vd^*$ and the q-axis voltage command $vq^*$. In this manner, it is possible to suppress the d-axis current command $id^*$ and the q-axis current command $iq^*$ from overshooting the target value and to stabilize the behavior of the motor more quickly.

According to the motor control device 1 of the present disclosure, in a case where the weakening magnetic field control is executed, the current command generation unit 24 generates the first q-axis current command $iq_1^*$ based on the fourth variable that is changed by the first d-axis current command $id_1^*$ and the fifth variable based on the torque command of the motor. In this manner, the q-axis current command $iq^*$ can be generated in consideration of each parameter when the motor 4 is driven. That is, it is possible to further stabilize the behavior of the motor 4 in consideration of the actual operation of the motor 4.

(Additional Remarks)

The present disclosure has been described above with reference to the embodiments, but the technical scope of the present disclosure is not limited to the above-described embodiments. Various modifications or improvements can be added to the above-described embodiments within the scope not departing from the concept of the present disclosure, and forms to which the modifications or the improvements are added are also included in the technical scope of the present disclosure. The embodiments may be appropriately combined.

The motor control device described in the above-described embodiment and the compressor including the same are understood as follows, for example.

A motor control device (1) according to a first aspect of the present disclosure is a motor control device that performs weakening magnetic field control by causing a negative current to flow to a d-axis current (id), the motor control device including: an inverter (3) that converts a direct current voltage into a three-phase alternating voltage and outputs the three-phase alternating voltage to a motor; inverter control means (10) for controlling the inverter; and current command generation means (24) for generating a first d-axis current command ($id_1^*$) based on an inter-line voltage command including a d-axis voltage command ($vd^*$) and a q-axis voltage command ($vq^*$) of the motor, and generating a first q-axis current command ($iq_1^*$) based on the first d-axis current command, in a case where the weakening magnetic field control is executed.

According to the motor control device of the present disclosure, the current command generation means generates the first d-axis current command based on the inter-line voltage command including the d-axis voltage command and the q-axis voltage command of the motor and generates the first q-axis current command based on the first d-axis current command, in a case where the weakening magnetic field control is executed. In other words, the q-axis current command is calculated based on the d-axis current command instead of being calculated independently of the d-axis current command. In this manner, it is possible to easily achieve the consistency between the d-axis current command and the q-axis current command for controlling the rotation speed of the motor. Further, since the consistency between the d-axis current command and the q-axis current command is improved, the oscillation of the motor is reduced, and the behavior of the motor can be stabilized.

In the motor control device according to a second aspect of the present disclosure, in the first aspect, the motor control device further includes: determination means (25) for determining that the weakening magnetic field control is executed in a case where the inter-line voltage command of the motor exceeds a predetermined output value of the inverter, which is determined based on a direct current voltage input to the inverter; and selection means (23) for selecting the first d-axis current command in a case where the determination means determines that the weakening magnetic field control is executed, and selecting a second d-axis current command (id$_2$*) set in advance in a case where the determination means determines that the weakening magnetic field control is not executed.

According to the motor control device of the present disclosure, it is possible to select whether or not to generate the first d-axis current command and the first q-axis current command based on the first d-axis current command according to whether or not the weakening magnetic field control is executed. That is, in a case where the weakening magnetic field control is not executed, the calculation processing amount of the d-axis current command can be reduced by using the second d-axis current command, which is a predetermined value set in advance. For example, it is possible to use an inexpensive microcontroller as the inverter control means, and thus it is possible to reduce costs.

In the motor control device according to a third aspect of the present disclosure, in the first aspect or the second aspect, the current command generation means generates the first d-axis current command based on a third variable which is a difference between a first variable that is a value of a square of the direct current voltage and a second variable that is a sum of squares of the d-axis voltage command based on a previous value of the first d-axis current command and the q-axis voltage command based on a previous value of the first q-axis current command, and generates the first q-axis current command based on the generated first d-axis current command, in a case where the weakening magnetic field control is executed.

According to the motor control device of the present disclosure, the current command generation means generates the first d-axis current command based on the third variable which is the difference between the first variable that is the value of the square of the direct current voltage and the second variable that is the sum of squares based on the previous values of the d-axis voltage command based on the first d-axis current command and the q-axis voltage command based on the first q-axis current command, and generates the first q-axis current command based on the newly generated first d-axis current command, in a case where the weakening magnetic field control is executed. In this manner, the first d-axis current command and the first q-axis current command can be commands in consideration of changes in the direct current voltage command, the d-axis voltage command, and the q-axis voltage command. Therefore, it is possible to easily achieve the consistency between the d-axis current command and the q-axis current command.

The current command generation unit 24 generates the first d-axis current command and the first q-axis current command by using the second variable based on the previous values of the d-axis voltage command and the q-axis voltage command. In this manner, it is possible to suppress the overshoot of the d-axis current command and the q-axis current command from the target value and to stabilize the behavior of the motor more quickly.

In the motor control device according to a fourth aspect of the present disclosure, in the first aspect to the third aspect, the current command generation means calculates a fourth variable based on the first d-axis current command, a d-axis inductance of the motor, a q-axis inductance of the motor, and an interlinked magnetic flux of the motor, and generates the first q-axis current command based on the fourth variable and a fifth variable based on a torque command (τ*) of the motor, in a case where the weakening magnetic field control is executed.

According to the motor control device of the present disclosure, the current command generation means generates the first q-axis current command based on the fourth variable that changes according to the first axis current command and the fifth variable based on the torque command of the motor, in a case where the weakening magnetic field control is executed. In this manner, the q-axis current command can be generated in consideration of each parameter when driving the motor. That is, it is possible to further stabilize the behavior of the motor in consideration of the actual operation of the motor.

A compressor according to a first aspect of the present disclosure includes: the motor control device according to any one of the first aspect to the fourth aspect; and a compressor motor (4) that is drive-controlled by the motor control device.

Reference Signs List

1: Motor control device
2: Converter
3: Inverter
4: Motor
5: Current sensor
6: Voltage sensor
7: A/D conversion unit
8: A/D conversion unit
10: Inverter control device
11: Three-phase/two-phase conversion unit
12: Speed/position estimation unit
15: Current PI control unit
16: Two-phase/three-phase conversion unit
17: PWM control unit
21: First processing unit
22: Second processing unit
23: Selection unit
24: Current command generation unit
25: Voltage saturation determination unit
26: Calculation unit
$id^*$: d-axis current command
$id_1^*$: First d-axis current command
$id_2^*$: Second d-axis current command
$iq^*$: q-axis current command
$iq_1^*$: First q-axis current command
$iq_2^*$: Second q-axis current command
$vd^*$: d-axis voltage command
$vq^*$: q-axis voltage command
$\tau^*$: Torque command

**Claims**

1. A motor control device that performs weakening magnetic field control by causing a negative current to flow to a d-axis current, the motor control device comprising:

   an inverter that converts a direct current voltage into a three-phase alternating voltage and outputs the three-phase alternating voltage to a motor;
   inverter control means for controlling the inverter; and
   current command generation means for generating a first d-axis current command based on an inter-line voltage command including a d-axis voltage command and a q-axis voltage command of the motor, and generating a first q-axis current command based on the first d-axis current command, in a case where the weakening magnetic field control is executed.

2. The motor control device according to Claim 1, further comprising:

   determination means for determining that the weakening magnetic field control is executed in a case where the inter-line voltage command of the motor exceeds a predetermined output value of the inverter, which is determined based on a direct current voltage input to the inverter; and
   selection means for selecting the first d-axis current command in a case where the determination means determines that the weakening magnetic field control is executed, and selecting a second d-axis current command set in advance in a case where the determination means determines that the weakening magnetic field control is not executed.

3. The motor control device according to Claim 1,
   wherein the current command generation means generates the first d-axis current command based on a third variable which is a difference between a first variable that is a value of a square of the direct current voltage and a second variable that is a sum of squares of the d-axis voltage command based on a previous value of the first d-axis current command and the q-axis voltage command based on a previous value of the first q-axis current command, and generates the first q-axis current command based on the generated first d-axis current command, in a case where the weakening magnetic field control is executed.

4. The motor control device according to Claim 1,
   wherein the current command generation means calculates a fourth variable based on the first d-axis current command, a d-axis inductance of the motor, a q-axis inductance of the motor, and an interlinked magnetic flux of the motor, and generates the first q-axis current commandbased on the fourth variable and a fifth variable based on a torque command of the motor, in a case where the weakening magnetic field control is executed.

5. A compressor comprising:

   the motor control device according to Claim 1; and
   a compressor motor that is drive-controlled by the motor control device.

FIG. 1

## FIG. 2

## FIG. 3

## FIG. 4A

ω_A

ω_B

## FIG. 4B

id_A

id_B

## FIG. 4C

iq_B

iq_A

## FIG. 4D

τ m

## FIG. 5A

$\omega$_A

$\omega$_B

## FIG. 5B

id_A

id_B

## FIG. 5C

iq_B

iq_A

## FIG. 5D

$\tau$ m

## INTERNATIONAL SEARCH REPORT

| International application No. |
|---|
| **PCT/JP2024/014592** |

**A. CLASSIFICATION OF SUBJECT MATTER**

***H02P 21/24***(2016.01)i; ***H02P 27/08***(2006.01)i
FI: H02P21/24; H02P27/08

According to International Patent Classification (IPC) or to both national classification and IPC

**B. FIELDS SEARCHED**

Minimum documentation searched (classification system followed by classification symbols)

H02P21/24; H02P27/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-205017 A (MITSUBISHI HEAVY INDUSTRIES THERMAL SYSTEMS, LTD.) 16 November 2017 (2017-11-16) paragraphs [0024]-[0064], fig. 1-8 | 1-5 |
| A | JP 2013-78200 A (SANKEN ELECTRIC CO., LTD.) 25 April 2013 (2013-04-25) paragraphs [0010]-[0068], fig. 1-4 | 1-5 |
| A | WO 2009/063786 A1 (YASKAWA ELECTRIC MFG. CO., LTD.) 22 May 2009 (2009-05-22) paragraphs [0023]-[0047], fig. 1-10 | 1-5 |
| A | CN 110677088 A (NANJING YUEBOO POWER SYSTEM CO., LTD.) 10 January 2020 (2020-01-10) entire text, all drawings | 1-5 |

☐ Further documents are listed in the continuation of Box C.    ☑ See patent family annex.

| | | |
|---|---|---|
| \* | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/014592**

| Patent document cited in search report | | | Publication date (day/month/year) | Patent family member(s) | Publication date (day/month/year) |
|---|---|---|---|---|---|
| JP | 2017-205017 | A | 16 November 2017 | (Family: none) | |
| JP | 2013-78200 | A | 25 April 2013 | CN 103036497 A | |
| WO | 2009/063786 | A1 | 22 May 2009 | US 2010/0219780 A1 paragraphs [0017]-[0099], fig. 1-10 CN 101855825 A | |
| CN | 110677088 | A | 10 January 2020 | (Family: none) | |

Form PCT/ISA/210 (patent family annex) (July 2022)

**REFERENCES CITED IN THE DESCRIPTION**

**Patent documents cited in the description**

- JP 2017205017 A